# EUROPÄISCHE PATENTSCHRIFT

(11) **EP 3 623 885 B1**
(45) Veröffentlichungstag und Bekanntmachung des Hinweises auf die Patenterteilung: **15.10.2025**
(21) Anmeldenummer: 19193037.9
(22) Anmeldetag: 07.05.2018
(51) Int. Cl.: G05B 19/4097, G05B 19/418, B25J 9/16, B25J 11/00, B25J 13/08, G06F 3/01, G07C 3/14

(54) **VERFAHREN ZUR HAPTISCHEN PRÜFUNG EINES OBJEKTES**
METHOD FOR HAPTIC TESTING OF AN OBJECT
PROCÉDÉ D'ESSAI HAPTIQUE D'UN OBJET

(30) Priorität: 11.05.2017 DE 102017110230
(43) Veröffentlichungstag der Anmeldung: 18.03.2020
(62) Teilanmeldung aus: 18171055.9
(73) Patentinhaber: Battenberg, Günther, 35037 Marburg (DE)
(72) Erfinder: Battenberg, Günther, 35274 Kirchhain (DE)
(74) Vertreter: Stoffregen, Hans-Herbert

(56) Entgegenhaltungen:
- EP-A2- 2 216 144
- US-A1- 2002 133 264
- US-A1- 2003 132 968

## Beschreibung

Die Anmeldung bezieht sich auf ein Verfahren zur haptischen Prüfung eines physischen Objektes nach dem Oberbegriff des Anspruchs 1.

Die produzierende Industrie befindet sich in einem Umbruch. Die Varianten-Vielfalt von Produkten steigt. Dabei sinken die Serienstückzahlen und Entwicklungsdauern mit dem Ziel, Kundenwünsche flexibel und möglichst individuell zu bedienen. Gleichzeitig steigen die Anforderungen an die Qualität der Bauteile, Baugruppen und Systeme.

Neben der reinen Funktionalität umfassen zu beachtende Qualitätskriterien auch subjektive Eindrücke hinsichtlich Anmutung und Wertigkeit, insbesondere bei hochpreisigen Investitionsgütern. Neben visuellen Merkmalen gewinnen haptische Merkmale eine immer größere Bedeutung.

In immer größerem Umfang gelangen roboterbasierte Messverfahren zur Anwendung. Diese ermöglichen eine reproduzierbare Beurteilung von Produkten hinsichtlich verschiedenster objektiver physikalischer Qualitätskriterien.

Gemäß der DE 10 2005 006 575 A1 besteht eine innovative Kopplung von Messrobotik und Methoden der Psychophysik und der experimentellen Psychologie. Es werden objektive und subjektive Kriterien gekoppelt, um eine ganzheitliche Evaluation der Produktqualität durchzuführen.

Roboterbasierte Messverfahren sind zum Beispiel der DE 10 2016 106 488 B3 oder der DE 10 2015 102 238 A1 zu entnehmen.

Ein Verfahren der eingangs genannten Art ist der EP 2 216 144 A2 zu entnehmen.

Die vorliegende Erfindung setzt sich mit der Problematik auseinander, die zunehmende Komplexität von Produkten sowie die zur Herstellung erforderlichen Entwicklungs-, Produktions- und Evaluationsschritte beherrschbar zu halten. Objektive und subjektive Qualitätskriterien sollen erfassbar sein.

Zur Lösung sieht die Erfindung vor ein Verfahren mit den Merkmalen des Anspruchs 1.

Nach dem Lösungsvorschlag wird ein Prüfstand vollständig virtualisiert, der den für die Qualitätsprüfung erforderlichen Messroboter aufweist. Dabei wird der virtuelle Prüfstand mit dem physischen Prüfstand gekoppelt, um auf Basis relevanter Zustandsinformationen virtuelle Simulationen durchzuführen. Es erfolgt an virtuellen und physischen Prototypen Qualitätsprüfungen, wobei eine Kopplung zwischen dem virtuellen und physischen Prüfstand erfolgt. Als Ergebnis erhält man eine hybride Qualitätsprüfung.

Beim virtuellen Prüfstand wird die Prüfeinrichtung, insbesondere in Form eines Roboters, virtualisiert, und mit dem funktionalen, virtuellen Objekt gekoppelt. Es entsteht ein funktionales, virtuelles Prüfsystem. Eine Methode zur virtuellen Qualitätsprüfung entsteht, wobei das komplette funktionelle Verhalten vom physischen Objekt, wie Tür, und physischer Prüfeinrichtung, wie Roboter, simuliert wird, um mögliche Testszenarien vor dem realen Aufbau prüfen zu können. Z.B. die Erreichbarkeit von Testpunkten, Messgeschwindigkeiten, Platzbedarf, Eliminierung von Störgrößen, Messungen von Betätigungskräften und -momenten können ermittelt werden.

Sind die simulierten Messungen bzw. Tests erfolgreich, werden die simulierten Abläufe in ein reales System übertragen, so dass die Programmierung des realen Prüfablaufs erfolgen kann.

Mit dem Verfahren können reale Systeme an globalen Standorten über z.B. die Cloud programmiert werden. Hierdurch ergeben sich enorme Zeitersparnisse für den Anwender und ein sicherer Nachweis für die Richtigkeit der Messungen, z.B. definierte Messpunkte etc.

Die hybride Qualitätsprüfung stellt eine Prüfmethode zur Verfügung, die
- die Planung des Qualitätsprüfversuchs mit Hilfe des virtuellen Prüfstands beschreibt,
- die Durchführung einer hybriden Qualitätsprüfung mit Hilfe des gekoppelten Prüfstandes zur Optimierung der Positionsgenauigkeit und Bewegungsverläuft des physischen Messroboters beschreibt,
- die Kopplung der mit dem hybriden Prototyp ermittelten subjektiven Messdaten mit denen im gekoppelten Prüfstand ermittelten objektiven Messdaten zu einer Perzeptions-Qualität des Prototyps beschreibt.

Es erfolgt eine Virtualisierung einer insbesondere Roboter-basierten Qualitätsprüfung mit dem Ziel, durch frühzeitige virtuelle Evaluation von objektiven und subjektiven Qualitätskriterien zukünftige Produkte
- durch den Verzicht auf physische Prototypen in weniger Entwicklungsschritten schneller und kostengünstiger herstellen zu können,
- durch früheren Einbezug subjektiver Evaluationskriterien besser an die Bedürfnisse des Kunden anpassen zu können und
- durch die gezielte frühzeitige Gestaltung auf die Bedürfnisse des Kunden hinsichtlich ihrer Produktqualität so steuern zu können, dass nur die tatsächlich benötigte, perzeptionsorientierte Qualität umgesetzt und so eine kostengünstigere Herstellung ermöglicht wird.

Die Erfindung wird durch Anspruch 1 definiert. Weitere vorteilhafte Ausführungsformen werden durch die abhängigen Ansprüche definiert.

Es zeigen:
- Fig. 1: eine Prinzipdarstellung eines ersten Prüfsystems, das nicht zu der Erfindung gehört, und
- Fig. 2: eine Prinzipdarstellung eines zweiten Prüfsystems.

Das erste Prüfsystem wird nachstehend anhand eines industrierelevanten Anwendungsfall in Form einer Türprüfsimulation erläutert. Bei diesem Anwendungsfall wird ein Messroboter verwendet, um eine Fahrzeugtür hinsichtlich verschiedener qualitativer und quantitativer Qualitätseigenschaften zu testen. Diese können dabei beispielsweise die Betätigungskraft, die Öffnungsgeschwindigkeit oder auch Dämpfungseigenschaften des Systems Fahrzeugtür betreffen.

Mit anderen Worten ist im Ausführungsbeispiel die Fahrzeugtür ein Objekt, das physisch zur Verfügung gestellt und virtuell nachempfunden wird.

Es wird ein virtuelles Prüfrobotersystem zur Simulation und zur subjektivbasierten Produktabsicherung in immersiven Entwicklungsumgebungen beschrieben.

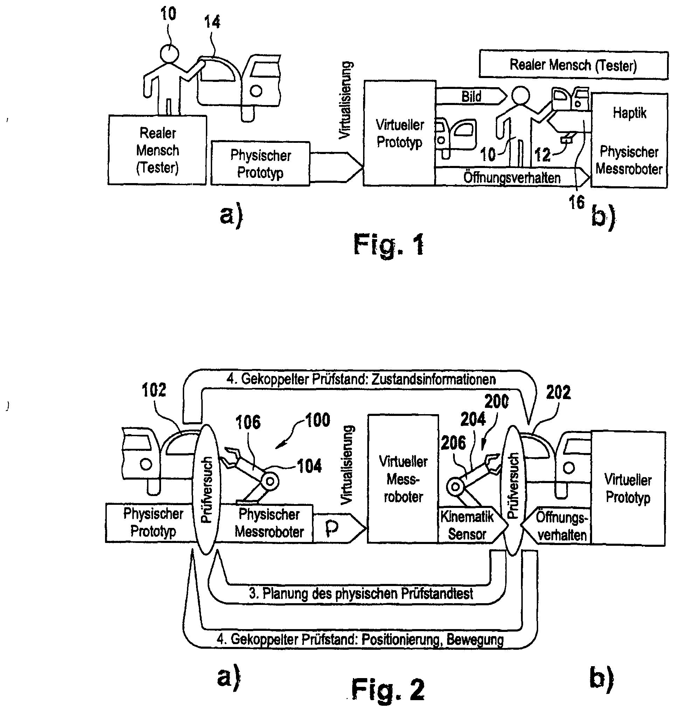

Anhand der Fig. 1 soll erläutert werden, wie eine Person 10 haptische Merkmale an einer Fahrzeugtür 12 wahrnimmt, ohne die reale, also physische Fahrzeugtür 14 selbst erfassen zu müssen.

Hierzu ist gemäß Fig. 1a vorgesehen, dass zunächst eine Analyse des physischen Objektes 14 oder Prototypen "Fahrzeugtür" hinsichtlich Funktion und dahinterstehender physikalischer Wirkmechanismen erfolgt. Auf Grund dieser Daten erfolgt eine Virtualisierung der Fahrzeugtür 14. Dabei kann unter Zugrundelegung von in Bibliotheken abgespeicherten Daten zusätzlich eine Optimierung der virtuellen Fahrzeugtür 12 in Bezug auf seine Funktion erzielt werden.

Insbesondere ist vorgesehen, das auch als physischen Prototyp bezeichnete physische Objekt aufbauend insbesondere auf dem Ansatz des Functional Digital Mock-Up's (FDMU oder FMU) zu virtualisieren. Dieser sieht die Kopplung eines virtuellen CAD-basierten Geometriemodells mit einer Verhaltenssimulation vor. Es kann eine Softwarekombination aus Dymola zur Verhaltensmodellierung und Unity3D zur Geometriedarstellung zum Aufbau des spezifischen virtuellen Prototyps benutzt werden. Es erfolgt sodann eine Hybridisierung des virtuellen Prototyps durch Kopplung mit einem haptischen Eingabegerät aufbauend insbesondere auf dem Ansatz des Smart Hybrid Prototyping (SHP). In dem Messroboter war eine mehrachsige Kraft- und Momentensensorik integriert.

Gemäß Fig. 1b wird die Tür 12 virtuell z.B. in einem Head-Mounted-Display dargestellt, das von einer Person genutzt wird. Zusätzlich wird der Messroboter 16 benutzt, der in räumlicher Position der virtuellen Fahrzeugtür 12 bereitgestellt wird. Der Roboter 16 ist mit einem bewegliche Glieder aufweisenden Arm versehen, in dem die Kraft- oder Momente-Sensoren integriert sind, um die auf den Roboter 16 einwirkenden Kräfte bzw. Momente erfassen zu können, über die wiederum Rückschlüsse über Betätigungskräfte, Öffnungsgeschwindigkeiten oder Dämpfungseigenschaften der virtuellen Tür 12 gewonnen werden können.

Erfasst die Person 10, also der reale Mensch z.B. den virtuellen Handgriff der Tür 12 - die Bewegung der Person bzw. der Hand werden durch Markierungen an der Hand mittels z.B. Kameras erfasst, also z.B. durch ein optisches Trackingsystem -, so befindet sich in dieser Position ein Abschnitt des Roboterarms oder ein von diesem ausgehendes Element, so dass beim virtuellen Schließen oder Öffnen der Tür 12 der Arm bzw. das Element mitbewegt wird mit der Folge, dass die einwirkenden Kräfte/Momente erfassbar sind. Somit gewinnt die Person 10 einen haptischen Eindruck von der Schließ- bzw. Öffnungsbewegung der Tür 12 mit der Folge, dass Parameter auf Grund der von dem Roboter 16 ermittelten Daten erfassbar sind, die für den Schließ- bzw. Öffnungsvorgang einer Fahrzeugtür unter Berücksichtigung subjektiver Eindrücke der Person 10 relevant sind.

Es erfolgt ein virtuelles Prototyping des physischen Objektes, wobei Eigenschaften des physischen Objektes auf das virtuelle Objekt abgebildet sind. Mittels einer realen Messeinrichtung, insbesondere eines Roboters werden sodann virtuelle Bewegungen des virtuellen Objekts erfasst, um Daten zu erhalten, die bei der Konstruktion des dem virtuellen Objekts zugrundeliegenden physischen Objekts berücksichtigt werden können.

Ist beim Ausführungsbeispiel der Fig. 1 eine reale Person erforderlich, um Qualitätsparameter zu ermitteln, so zielt das Ausführungsbeispiel der Fig. 2, das die Erfindung widerspiegelt, auf die Möglichkeit ab, virtuell Kenngrößen bzw. Parameter zu ermitteln, die auf physischen Objekten abgebildet werden, ohne dass eine reale Person erforderlich ist.

Dabei wird erfindungsgemäß ein physischer Prüfstand virtualisiert. Der physische Prüfstand umfasst einen Messroboter, Prüfstandstechnik wie Messtechnik, und Prototypenumgebung wie Teilfahrzeug. Dieser Ansatz baut auf den Ansätzen der Robotersimulation auf und koppelt diese mit den Ansätzen des Functional Digital Mock-Up's (FDMU oder FMU). Es folgt sodann eine Kopplung des virtuellen Prüfstandes und des virtuellen Prototyps, wie dies zuvor erläutert worden ist, zum virtuellen Prüfsystem. Eine Qualitätsprüfung verschiedener Qualitätsmerkmale mit dem virtuellen Prüfsystem erfolgt sodann.

Insbesondere zeichnet sich die Erfindung dadurch aus, dass neben der Nutzung etablierter Ansätze der Robotermodellierung und -simulation Modelle zur Einbindung der Roboterregelung, insbesondere der mehrachsigen Kraft- und Momentensensorik benutzt werden. Dies ermöglicht die Virtualisierung des Messroboters sowie der Prüfstandtechnik. Die zuvor erläuterte Virtualisierung des physischen Prototypens wird zu einem virtuellen Prüfsystem erweitert, um ein Werkzeug für die einfache Virtualisierung der physischen Prüfstandelemente bereitzustellen. Ein Verfahren zur virtuellen Qualitätsprüfung wird durch das mit diesem Werkzeug erstellte virtuelle Prüfsystem ermöglicht.

In der linken Darstellung der Fig. 2 ist rein schemenhaft ein Prüfstand 100 dargestellt, in dem die Funktion einer Fahrzeugtür 102 als physisches Objekt erfasst werden soll. Der Prüfstand 100 weist einen Prüfroboter 104 auf, der gleichfalls einen bewegliche Glieder aufweisenden Arm 106 mit Kraft- und Momentensensoren besitzt, der mit der Kraftfahrzeugtür 102 als physisches Objekt oder physischer Prototyp wechselwirkt, um diese zu schließen bzw. zu öffnen. In dem Prüfstand 100 kann sich weiteres Equipment (Prüfstandtechnik) befinden, ohne dass auf dieses näher eingegangen wird.

Es erfolgt eine Analyse des Messroboters 104 sowie Prüfstandequipments in Bezug auf Funktionen und dahinterstehender physikalischer Wirkmechanismen. Auf der Basis dieser Daten erfolgt eine Virtualisierung des Messroboters 104 und des Prüfstandequipments. Es wird sodann in einem virtuellen Prüfstand 200 ein virtuelles Objekt 202 - im Ausführungsbeispiel eine Fahrzeugtür - implementiert. Der virtuelle Prüfstand 200 umfasst - dem physischen Prüfstand 100 nachempfunden - einen virtuellen Messroboter 204 mit einem bewegliche Glieder aufweisenden Arm 206. Auch sind virtuell Kräfte- und Momente-Sensoren integriert.

Bei der Virtualisierung des Prüfstandes werden insbesondere die Ansätze des Smart Hybrid Prototyping (SHP) und des Functional Digital Mock-Up's (FDMU oder FMU) benutzt.

Insbesondere wird eine Softwarekombination aus Dymola (zur Verhaltensmodellierung) und Unity3D (zur Geometriedarstellung) zum Aufbau des virtuellen Prototyps eingesetzt. Der virtuelle Prototyp kann sodann mit der Realität abgeglichen, verfeinert und verifiziert werden. Entsprechend der zuvor erfolgten Erläuterungen kann somit die Planung des physischen Prüfstandtests erfolgen, d.h. die Ergebnisse aus dem virtuellen Prüfsystem können zur Planung und Optimierung des physischen Prüfsystems verwendet werden.

Sodann erfolgt eine virtuelle Qualitätsprüfungsplanung zur Durchführung von Prüfstandsversuchen mit Hilfe des virtuellen Prüfstandes 200.

Die Prüfungen an dem physischen Objekt 102 werden sodann auf der Basis der in dem virtuellen Prüfstand 200 gewonnenen Daten übertragen. Dabei befindet sich im physischen Prüfstand 100 gleichfalls das zu prüfende Objekt, im Ausführungsbeispiel also die Fahrzeugtür 102.

Es erfolgt sodann eine Analyse der im physischen Prüfstand 100 auftretenden Abweichungen und Probleme hinsichtlich Positionsgenauigkeit und Bewegungsverläufen des Messroboters 104 bei der Interaktion mit dem physischen Prototypen 102. Die Abweichungen und Probleme werden mittels eines Optimierungs- und Fehlerbehebungsalgorithmus in den virtuellen Prüfstand 200 implementiert, um die Abweichungen und Probleme zu lösen. Dabei erfolgt eine Kopplung der Sensorik des physischen Prüfstands 100 mit dem virtuellen Prüfstand 200, so dass Zustandsinformationen in dem virtuellen Prüfstand 200 eingespielt werden können. Umgekehrt ist eine Kopplung zwischen dem virtuellen Prüfstand 200 und dem physischen Prüfstand 100 gegeben, um die erarbeiteten Optimierungen und Fehlerbehebungen in den physischen Prüfstand 100 einzuspielen.

Dabei können ergänzend Tests durchgeführt werden, um gezielt Positionsungenauigkeit oder fehlerhafte Bewegungsverläufe in dem physischen Prüfstand 100 auszulösen.

Es folgt eine Rückkopplung zwischen dem physischen und virtuellen Prüfstand 100, 200, um eine Optimierung zu erzielen. Eine virtuelle Qualitätsprüfung wird in eine reale implementiert.

In Weiterbildung erfolgt eine Kopplung des physischen Prüfstands mit dem virtuellen Prüfstand, um den virtuellen Prüfstand durch Zustandsinformationen des physischen Prüfstands zu befähigen, Abweichungen in diesem zu erkennen, durch Simulation Korrekturen abzuleiten und diese in den physischen Prüfstand zurückspielen zu können. Dieser Lösungsansatz ist in Fig. 2 mit dem Pfeil P (Planung des physischen Prüfstandtest) gekennzeichnet.

Aufgrund der erfindungsgemäßen Lehre ergeben sich Möglichkeiten, Entwicklungszeiten zu reduzieren sowie die zunehmende Komplexität im Bereich der Entwicklung individualisierter Produkte mit teilweise abstrakten Qualitätskriterien beherrschbar zu erhalten. Die Möglichkeit, Prototypen zu virtualisieren und mittels eines physischen Messroboters haptisch erlebbar zu machen, erlaubt zukünftig den Aufbau realer Prototypenaufbauten deutlich zu reduzieren oder sogar ganz darauf zu verzichten. Der Messroboter wird aufgrund der Virtualisierung von Prototypen in die Lage versetzt, beliebige prototypische Systeme haptisch zu simulieren. Die Möglichkeit eines komplett virtuellen Prüfsystems stellt ein neues Softwarewerkzeug zur Verfügung, mit dem die haptischen Eindrücke von menschlichen Testpersonen vollständig im virtuellen Raum vorhergesagt werden können, ohne auf Hardwarekomponenten zwingend zurückgreifen zu müssen. Dies stellt insbesondere für Anbieter komplexer Systeme mit langen Zulieferketten und einer hohen Komponentenvielfalt, wie diese in der Automobilindustrie vorherrscht, ein Werkzeug dar, mit dem Entwicklungszeiten und -aufwände reduziert und der gesamte Entwicklungs- und Fertigungsprozess flexibilisiert werden kann.

Hervorzuhebende Merkmale sind:
a) Es kann die physische Einrichtung in räumlicher Position des virtuellen Objektes bereitgestellt werden.
b) Es kann ein bewegliche Glieder aufweisender Arm eines Roboters als die physische Einrichtung mit integrierten Kraft- und/oder Momenten-Sensoren benutzt werden.
c) Es kann bei der Interaktion mit dem virtuellen Objekt die auf die physische Einrichtung einwirkenden Kräfte und/oder Momente ermittelt werden, die mit für das Bewegen des physischen Objekts charakteristischen Kräften und/oder Momenten verglichen werden und gegebenenfalls bei Abweichungen eine Rückkopplung auf dem physischen Objekt zugeordnete Eigenschaften, wie Öffnungsgeschwindigkeit, Dämpfung, beeinflusst wie verändert werden.
d) Es kann zumindest eine Funktion und/oder ein Wirkmechanismus des physischen Objektes ermittelt und entsprechend das virtuelle Objekt gestaltet werden.

Dabei wird erfindungsgemäß ein physischer Prüfstand virtualisiert. Der physische Prüfstand umfasst einen Messroboter, Prüfstandstechnik wie Messtechnik, und Prototypenumgebung wie Teilfahrzeug. Dieser Ansatz baut auf den Ansätzen der Robotersimulation auf und koppelt diese mit den Ansätzen des Functional Digital Mock-Up's (FDMU oder FMU). Es folgt sodann eine Kopplung des virtuellen Prüfstandes und des virtuellen Prototyps, wie dies zuvor erläutert worden ist, zum virtuellen Prüfsystem. Eine Qualitätsprüfung verschiedener Qualitätsmerkmale mit dem virtuellen Prüfsystem erfolgt sodann.

Insbesondere zeichnet sich die Erfindung dadurch aus, dass neben der Nutzung etablierter Ansätze der Robotermodellierung und -simulation Modelle zur Einbindung der Roboterregelung, insbesondere der mehrachsigen Kraft- und Momentensensorik benutzt werden. Dies ermöglicht die Virtualisierung des Messroboters sowie der Prüfstandtechnik. Die zuvor erläuterte Virtualisierung des physischen Prototypens wird zu einem virtuellen Prüfsystem erweitert, um ein Werkzeug für die einfache Virtualisierung der physischen Prüfstandelemente bereitzustellen. Ein Verfahren zur virtuellen Qualitätsprüfung wird durch das mit diesem Werkzeug erstellte virtuelle Prüfsystem ermöglicht.

In der linken Darstellung der Fig. 2 ist rein schemenhaft ein Prüfstand 100 dargestellt, in dem die Funktion einer Fahrzeugtür 102 als physisches Objekt erfasst werden soll. Der Prüfstand 100 weist einen Prüfroboter 104 auf, der gleichfalls einen bewegliche Glieder aufweisenden Arm 106 mit Kraft- und Momentensensoren besitzt, der mit der Kraftfahrzeugtür 102 als physisches Objekt oder physischer Prototyp wechselwirkt, um diese zu schließen bzw. zu öffnen. In dem Prüfstand 100 kann sich weiteres Equipment (Prüfstandtechnik) befinden, ohne auf dieses näher eingegangen wird.

Es erfolgt eine Analyse des Messroboters 100 sowie Prüfstandequipments in Bezug auf Funktionen und dahinterstehender physikalischer Wirkmechanismen. Auf der Basis dieser Daten erfolgt eine Virtualisierung des Messroboters 100 und des Prüfstandequipments. Es wird sodann in einem virtuellen Prüfstand 200 ein virtuelles Objekt 202 - im Ausführungsbeispiel eine Fahrzeugtür - implementiert. Der virtuelle Prüfstand 200 umfasst - dem physischen Prüfstand 100 nachempfunden - einen virtuellen Messroboter 204 mit einem bewegliche Glieder aufweisenden Arm 206. Auch sind virtuell Kräfte- und Momente-Sensoren integriert.

Bei der Virtualisierung des Prüfstandes werden insbesondere die Ansätze des Smart Hybrid Prototyping (SHP) und des Functional Digital Mock-Up's (FDMU oder FMU) benutzt.

Insbesondere wird eine Softwarekombination aus Dymola (zur Verhaltensmodellierung) und Unity3D (zur Geometriedarstellung) zum Aufbau des virtuellen Prototyps eingesetzt. Der virtuelle Prototyp kann sodann mit der Realität abgeglichen, verfeinert und verifiziert werden. Entsprechend zuvor erfolgte Erläuterungen kann somit die Planung des physischen Prüfstandtests erfolgen, d.h. die Ergebnisse aus dem virtuellen Prüfsystem können zur Planung und Optimierung des physischen Prüfsystems verwendet werden.

Sodann erfolgt eine virtuelle Qualitätsprüfungsplanung zur Durchführung von Prüfstandsversuchen mit Hilfe des virtuellen Prüfstandes 200.

Die Prüfungen an dem physischen Objekt 102 werden sodann auf der Basis der in dem virtuellen Prüfstand 200 gewonnenen Daten übertragen. Dabei befindet sich im physischen Prüfstand 100 gleichfalls das zu prüfende Objekt, im Ausführungsbeispiel also die Fahrzeugtür 102.

Es erfolgt sodann eine Analyse der im physischen Prüfstand 100 auftretenden Abweichungen und Probleme hinsichtlich Positionsgenauigkeit und Bewegungsverläufen des Messroboters 104 bei der Interaktion mit dem physischen Prototypen 102. Die Abweichungen und Probleme werden mittels eines Optimierungs- und Fehlerbehebungsalgorithmus in den virtuellen Prüfstand 200 implementiert, um die Abweichungen und Probleme zu lösen. Dabei erfolgt eine Kopplung der Sensorik des physischen Prüfstands 100 mit dem virtuellen Prüfstand 200, so dass Zustandsinformationen in dem virtuellen Prüfstand 200 eingespielt werden können. Umgekehrt ist eine Kopplung zwischen dem virtuellen Prüfstand 200 und dem physischen Prüfstand 100 gegeben, um die erarbeiteten Optimierungen und Fehlerbehebungen in den physischen Prüfstand 100 einzuspielen.

Dabei können ergänzend Tests durchgeführt werden, um gezielt Positionsungenauigkeit oder fehlerhafte Bewegungsverläufe in dem physischen Prüfstand 100 auszulösen.

Es folgt eine Rückkopplung zwischen dem physischen und virtuellen Prüfstand 100, 200, um eine Optimierung zu erzielen. Eine virtuelle Qualitätsprüfung wird in eine reale implementiert.

In Weiterbildung erfolgt eine Kopplung des physischen Prüfstands mit dem virtuellen Prüfstand, um den virtuellen Prüfstand durch Zustandsinformationen des physischen Prüfstands zu befähigen, Abweichungen in diesem zu erkennen, durch Simulation Korrekturen abzuleiten und diese in den physischen Prüfstand zurückspielen zu können. Dieser Lösungsansatz ist in Fig. 2 mit dem Pfeil P (Planung des physischen Prüfstandtest) gekennzeichnet.

Aufgrund der erfindungsgemäßen Lehre ergeben sich Möglichkeiten, Entwicklungszeiten zu reduzieren sowie die zunehmende Komplexität im Bereich der Entwicklung individualisierter Produkte mit teilweise abstrakten Qualitätskriterien beherrschbar zu erhalten. Die Möglichkeit, Prototypen zu virtualisieren und mittels eines physischen Messroboters haptisch erlebbar zu machen, erlaubt zukünftig den Aufbau realer Prototypenaufbauten deutlich zu reduzieren oder sogar ganz darauf zu verzichten. Der Messroboter wird aufgrund der Virtualisierung von Prototypen in die Lage versetzt, beliebige prototypische Systeme haptisch zu simulieren. Die Möglichkeit eines komplett virtuellen Prüfsystems stellt ein neues Softwarewerkzeug zur Verfügung, mit dem die haptischen Eindrücke von menschlichen Testpersonen vollständig im virtuellen Raum vorhergesagt werden können, ohne auf Hardwarekomponenten zwingend zurückgreifen zu müssen. Dies stellt insbesondere für Anbieter komplexer Systeme mit langen Zulieferketten und einer hohen Komponentenvielfalt, wie diese in der Automobilindustrie vorherrscht, ein Werkzeug dar, mit dem Entwicklungszeiten und -aufwände reduziert und der gesamte Entwicklungs- und Fertigungsprozess flexibilisiert werden kann.

Hervorzuhebende Merkmale sind:
a) Es kann die physische Einrichtung in räumlicher Position des virtuellen Objektes bereitgestellt werden.
b) Es kann ein bewegliche Glieder aufweisender Arm eines Roboters als die physische Einrichtung mit integrierten Kraft- und/oder Momenten-Sensoren benutzt werden.
c) Es kann bei der Interaktion mit dem virtuellen Objekt die auf die physische Einrichtung einwirkenden Kräfte und/oder Momente ermittelt werden, die mit für das Bewegen des physischen Objekts charakteristischen Kräften und/oder Momenten verglichen werden und gegebenenfalls bei Abweichungen eine Rückkopplung auf dem physischen Objekt zugeordnete Eigenschaften, wie Öffnungsgeschwindigkeit, Dämpfung, beeinflusst wie verändert werden.
d) Es kann zumindest eine Funktion und/oder ein Wirkmechanismus des physischen Objektes ermittelt und entsprechend das virtuelle Objekt gestaltet werden.

Die Erfindung zeichnet sich insbesondere auch aus durch
e) ein Verfahren zur haptischen Prüfung eines physischen Objektes mittels einer physischen Prüfeinrichtung in Form eines Roboters mit einem bewegliche Glieder aufweisenden Arm durch Interaktion zwischen der physischen Prüfeinrichtung und dem physischen Objekt umfassend die Verfahrensschritte
   - Analysieren der physischen Prüfeinrichtung und Erzeugen einer virtuellen Prüfeinrichtung von der physischen Prüfeinrichtung,
   - Bereitstellen eines virtuellen Objektes, das dem physischen Objekt entspricht,
   - Bereitstellen von ersten Daten, die bei einer Interaktion zwischen der virtuellen Prüfeinrichtung und dem virtuellen Objekt ermittelt werden,
   - Nutzung der ersten Daten zur Interaktion zwischen der physischen Prüfeinrichtung und dem physischen Objekt,
   wobei die Interaktion zwischen der virtuellen Prüfeinrichtung und dem virtuellen Objekt in Abhängigkeit von bei der Interaktion zwischen der physischen Prüfeinrichtung und dem physischen Objekt ermittelten zweiten Daten beeinflusst wird, und/oder umgekehrt.
f) Es kann die Interaktion zwischen der virtuellen Prüfeinrichtung und dem virtuellen Objekt in Abhängigkeit von bei der Interaktion zwischen der physischen Prüfeinrichtung und dem physischen Objekt ermittelten zweiten Daten beeinflusst werden.
g) Es kann als die physische Prüfeinrichtung ein Roboter mit einem bewegliche Glieder aufweisenden Arm verwendet werden, der mit dem physischen Objekt wechselwirkt.
h) Es kann als die virtuelle Prüfeinrichtung ein virtueller Roboter mit virtuell integrierter Sensorik zur Messung von Kraft und/oder Moment verwendet werden.
i) Es kann die virtuelle Prüfeinrichtung mit der physischen Prüfeinrichtung gekoppelt werden, wobei aufgrund in der virtuellen Prüfeinrichtung durchgeführter Simulationen erzeugte Daten, die z.B. Korrekturen in der Wechselwirkung zwischen Objekt und Prüfeinrichtung oder Eigenschaften des Objektes betreffen, in die physische Prüfeinrichtung zurückgekoppelt werden.

## Patentansprüche

1. Verfahren zur haptischen Prüfung eines physischen Objektes (102) mittels einer physischen Prüfeinrichtung (104) in Form eines Messroboters mit einem bewegliche Glieder aufweisenden Arm und einer Sensorik zur Messung von Kraft und/oder Moment durch Interaktion zwischen der physischen Prüfeinrichtung und dem physischen Objekt (102) umfassend die Verfahrensschritte
- Bereitstellen eines virtuellen Objektes (202), das dem physischen Objekt (102) entspricht, in Form eines virtuellen CAD-basierten Geometriemodells mittels eines Computers,
**dadurch gekennzeichnet,**
**dass** bei dem Verfahren als physischer Messroboter (104) ein solcher verwendet wird, bei dem die Sensorik zur Messung von Kraft und/oder Moment als Kraft- und Momentsensorik in dem bewegliche Glieder aufweisenden Arm integriert ist,
**dass** der physische Messroboter (104) sowie ein Prüfstandequipment einen physischen Prüfstand (100) bilden, der in Bezug auf Funktionen und dahinterstehenden physikalischen Wirkmechanismen mittels eines Computers analysiert wird,
**dass** auf der Basis der Analyse mittels des Computers eine Virtualisierung des physischen Messroboters (104) und des Prüfequipments erfolgt, wobei in einem bei der Virtualisierung erzeugten virtuellen Messroboter (204) virtuelle Kräfte- und Momente-Sensoren integriert sind,
**dass** in einem virtuellen Prüfstand (200) das virtuelle Objekt (202) implementiert wird, wobei der virtuelle Prüfstand (200) den virtuellen Messroboter (204) umfasst,
**dass** erste Daten bereitgestellt werden, die bei einer Interaktion zwischen dem virtuellen Messroboter (204) und dem virtuellen Objekt (202) ermittelt werden,
**dass** die ersten Daten zur Interaktion zwischen dem physischen Messroboter (104) und dem physischen Objekt (102) genutzt werden,
**dass** eine Analyse von im physischen Prüfstand (100) auftretenden Abweichungen und Problemen hinsichtlich Positionsgenauigkeit und Bewegungsabläufen des physischen Messroboters (104) bei der Interaktion mit dem physischen Objekt (102) erfolgt, wobei die Abweichungen und Probleme in Form von zweiten Daten mittels eines Optimierungs- und Fehlerbehebungsalgorithmus in den virtuellen Prüfstand (200) implementiert werden,
wobei eine Kopplung der Sensorik des physischen Prüfstands (100) mit dem virtuellen Prüfstand (200) erfolgt, wobei Zustandsinformationen in Form der Abweichungen und Probleme als zweite Daten in den virtuellen Prüfstand (200) eingespielt werden,
wobei die Interaktion zwischen dem virtuellen Messroboter (204) und dem virtuellen Objekt (202) in Abhängigkeit von bei der Interaktion zwischen dem physischen Messroboter (104) und dem physischen Objekt (102) ermittelten zweiten Daten beeinflusst wird,
um den virtuellen Prüfstand (200) durch die Zustandsinformationen des physischen Prüfstands (100) zu befähigen, die Abweichungen in dem physischen Prüfstand (100) zu erkennen und durch Simulation Korrekturen abzuleiten und diese in Form der ersten Daten in den physischen Prüfstand zurückzuspielen.

2. Verfahren nach Anspruch 1,
**dadurch gekennzeichnet,**
**dass** die aufgrund mit dem virtuellen Messroboter (204) durchgeführter Simulationen erzeugte ersten Daten Korrekturen in der Wechselwirkung zwischen dem virtuellen Objekt (202) und dem virtuellen Messroboter (204) oder Eigenschaften des virtuellen Objektes (202) betreffen.

## Claims

1. A method for haptic testing of a physical object (102) by means of a physical testing device (104) in the form of a measurement robot, with an arm having movable members and with a sensor system for measuring force and/or torque by interaction between the physical testing device and the physical object (102), comprising the method step
- provision of a virtual object (202), corresponding to the physical object (102), in the form of a virtual CAD-based geometry model, by means of a computer,
**characterized in**
**that** the physical measurement robot (104) used in the method is one in which the sensor system for measuring force and/or torque is integrated in the arm having movable members as a force and torque sensor system,
**that** the physical measurement robot (104) and test rig equipment form a physical test rig (100), which is analyzed in respect of its functions and its underlying physical effect mechanisms by means of a computer,
**that** the physical measurement robot (104) and the test equipment are virtualized on the basis of the analysis by means of the computer, wherein virtual force and torque sensors are integrated in a virtual measurement robot (204) generated during virtualization,
**that** the virtual object (202) is implemented in a virtual test rig (200), wherein the virtual test rig (200) comprises the virtual measurement robot (204),
**that** first data determined during an interaction between the virtual measurement robot (204) and the virtual object (202) is provided,
**that** the first data is used for the interaction between the physical measurement robot (104) and the physical object (102),
**that** an analysis of divergences and problems occurring in the physical test rig (100) and relating to positional accuracy and movement sequences of the physical measurement robot (104) is performed during the interaction with the physical object (102), wherein the divergences and problems are implemented in the virtual test rig (200) by means of an optimization and troubleshooting algorithm in the form of second data,
wherein the sensor system of the physical test rig (100) is coupled to the virtual test rig (200), wherein status information in the form of divergences and problems is input as second data into the virtual test rig (200),
wherein the interaction between the virtual measurement robot (204) and the virtual object (202) is influenced depending on the second data determined during the interaction between the physical measurement robot (104) and the physical object (102),
in order to enable the virtual test rig (200) to detect the divergences in the physical test rig (100) using the status information of the physical test rig (100), and to deduce corrections by simulation and feed said corrections back into the physical test rig in the form of first data.

2. The method according to claim 1,
**characterized in**
**that** the first data generated on the basis of simulations performed with the virtual measurement robot (204) relates to corrections in the interaction between the virtual object (202) and the virtual measurement robot (204), or to properties of the virtual object (202).

## Revendications

1. Procédé d'essai haptique d'un objet physique (102) au moyen d'un dispositif d'essai physique (104) sous la forme d'un robot de mesure avec un bras présentant des membres mobiles et un ensemble de capteurs pour mesurer la force et/ou le moment par interaction entre le dispositif d'essai physique et l'objet physique (102), comprenant l'étape suivante :
- Préparation d'un objet virtuel (202) qui correspond à l'objet physique (102), sous la forme d'un modèle géométrique virtuel basé sur la CAO, au moyen d'un ordinateur,
**caractérisé en ce**
**qu'**est utilisé, comme robot de mesure physique (104) lors du procédé, un robot dans lequel l'ensemble de capteurs pour mesurer la force et/ou le moment est intégré sous forme de capteurs de force et de moment dans le bras présentant des membres mobiles,
**que** le robot de mesure physique (104) ainsi qu'un équipement de banc d'essai forment un banc d'essai physique (100) dont les fonctions et les mécanismes d'action physiques sous-jacents sont analysés au moyen d'un ordinateur,
**que** sur la base de l'analyse au moyen de l'ordinateur a lieu une virtualisation du robot de mesure physique (104) et de l'équipement de contrôle, sachant que des capteurs virtuels de force et de moment sont intégrés dans un robot de mesure virtuel (204) généré par la virtualisation,
**que** l'objet virtuel (202) est implémenté dans un banc d'essai virtuel (200), sachant que le banc d'essai virtuel (200) comprend le robot de mesure virtuel (204),
**que** sont préparées des premières données qui sont déterminées par une interaction entre le robot de mesure virtuel (204) et l'objet virtuel (202),
**que** les premières données sont utilisées pour l'interaction entre le robot de mesure physique (104) et l'objet physique (102),
**qu'**une analyse des écarts et problèmes apparaissant dans le banc d'essai physique (100) concernant la précision de la position et les déroulements des mouvements du robot de mesure physique (104) a lieu lors de l'interaction avec l'objet physique (102), sachant que les écarts et problèmes sont implémentés dans le banc d'essai virtuel (200) sous la forme de secondes données au moyen d'un algorithme d'optimisation et de correction des erreurs,
sachant qu'a lieu un couplage de l'ensemble des capteurs du banc d'essai physique (100) avec le banc d'essai virtuel (200), sachant que des informations d'état sous forme d'écarts et de problèmes sont importées dans le banc d'essai virtuel (200),
sachant que l'interaction entre le robot de mesure virtuel (204) et l'objet virtuel (202) est influencée en fonction des secondes données déterminées lors de l'interaction entre le robot de mesure physique (104) et l'objet physique (102),
pour permettre au banc d'essai virtuel (200), au moyen des informations d'état du banc d'essai physique (100), de détecter les écarts dans le banc d'essai physique (100) et de déduire des corrections par simulation et de les réimporter dans le banc d'essai physique sous la forme des premières données.

2. Procédé selon la revendication 1,
**caractérisé en ce**
**que** les premières données générées en raison des simulations réalisées avec le robot de mesure virtuel (204) concernent des corrections dans l'interaction entre l'objet virtuel (202) et le robot de mesure virtuel (204) ou des caractéristiques de l'objet virtuel (202).
